# EUROPÄISCHE PATENTANMELDUNG

(11) **EP 4 803 781 A1**
(43) Veröffentlichungstag der Anmeldung: **09.09.2026**
(21) Anmeldenummer: 26156829.9
(22) Anmeldetag: 06.02.2026
(51) Int. Cl.: F16H 57/00, F16H 57/028, F16H 57/08, F16H 57/03

(54) **PLANETENGETRIEBE MIT SCHWINGUNGSOPTIMIERTEM GEHÄUSE**

(30) Priorität: 06.03.2025 DE 102025108472
(71) Anmelder: ZF Friedrichshafen AG, 88046 Friedrichshafen (DE)
(72) Erfinder: Hetmaniok, Simon, 58456 Witten (DE)
(74) Vertreter: ZF Friedrichshafen AG

(57) **Zusammenfassung**

Die Erfindung betrifft ein Getriebe mit einer ersten Planetenstufe und einem Gehäuse; wobei eine Außenwand des Gehäuses (101) einen um die erste Planetenstufe herum verlaufenden gewellten Bereich (107) aufweist. Eine Anzahl von Wellen des gewellten Bereichs (107) ist nicht ganzzahlig teilbar durch eine Anzahl von Planeten der ersten Planetenstufe.

## Beschreibung

Die Erfindung betrifft ein Getriebe nach dem Oberbegriff von Anspruch 1.

Aus dem Stand der Technik sind Getriebegehäuse mit wellenförmigen Versteifungen bekannt.

Der Erfindung liegt die Aufgabe zugrunde, ein gegenüber dem Stand der Technik verbessertes Getriebe verfügbar zu machen. Diese Aufgabe wird gelöst durch ein Getriebe nach Anspruch 1. Bevorzugte Weiterbildungen ergeben sich aus den Unteransprüchen und nachfolgender Beschreibung. In den Figuren sind bevorzugte Ausführungsbeispiele dargestellt.

Das erfindungsgemäße Getriebe kann als Windkraftgetriebe oder Seilbahngetriebe ausgestaltet sein. Es umfasst eine erste Planetenstufe und ein Gehäuse. Das Gehäuse weist eine Außenwand auf, die das Getriebe umschließt. Die Außenwand kapseit das Innere des Getriebes gegenüber dessen Umgebung. Im Inneren des Getriebes befinden sich die erste Planetenstufe und gegebenenfalls vorhandene weitere Planetenstufen, Zahnräder, Lager und/oder Wellen.

Die Außenwand weist einen um die erste Planetenstufe herum verlaufenden gewellten Bereich auf. Der gewellte Bereich versteift die Außenwand des Gehäuses. Dies wirkt sich positiv auf das Schwingungsverhalten des Getriebes aus.

In dem gewellten Bereich weist die Außenwand Wellen auf, die sich in Umfangsrichtung, das heißt um eine Mittelachse der ersten Planetenstufe herum erstrecken. Die Mittelachse kann identisch mit einer Drehachse eines Planetenträgers der ersten Planetenstufe sein.

Die Wellen bestehen jeweils aus einer Erhebung und einer Vertiefung. In einer Erhebung ist ein Abstand der Außenwand von der Mittelachse größer als in eine Vertiefung. Die Erhebungen und Vertiefungen erstrecken sich bevorzugt in Axialrichtung, das heißt entlang der Mittelachse. In Umfangsrichtung gehen die Erhebungen in eine jeweilige Vertiefung und die Vertiefungen in eine jeweilige Erhebung über. Entsprechend ist die Außenwand in mindestens einem Längsschnitt wellenförmig. Vorzugsweise ist die Außenwand in jedem Längsschnitt durch den gewellten Bereich wellenförmig. Die Wellenform ist durch eine periodische Funktion beschreibbar.

Vorzugsweise sind der gewellte Bereich und die Planetenstufe koaxial zueinander angeordnet, das heißt weisen eine gemeinsame Mittelachse auf. Insbesondere kann der gewellte Bereich zu der Mittelachse rotationssymmetrisch, das heißt durch Drehung um wenigstens einen Winkel, der größer als 0° und kleiner als 360° ist, um die Mittelachse auf sich selbst abbildbar, sein.

In axialer Richtung kann sich der gewellte Bereich zwischen zwei Schraubflanschen erstrecken. Insbesondere kann der gewellte Bereich einstückig mit den Schraubflanschen verbunden sein. Die Schraubflansche dienen dazu, einen Gehäuseteil, der den gewellten Bereich und die Schraubflansche umfasst, mit weiteren Gehäuseteilen zu verschrauben. Insbesondere kann der Gehäuseteil, der den gewellten Bereich und die Schraubflansche umfasst, mit einem Hohlrad einer zweiten Planetenstufe verschraubt sein, welches seinerseits einen Gehäuseteil bildet.

Eine Anzahl der Wellen des gewellten Bereichs stimmt mit einer Anzahl der Erhöhungen und einer Anzahl der Vertiefungen überein. Die Anzahl der Wellen kann größer als eine Anzahl von Planeten der ersten Planetenstufe sein. Erfindungsgemäß ist die Anzahl der Wellen des gewellten Bereichs nicht ganzzahlig teilbar durch die Anzahl der Planeten der ersten Planetenstufe. Dadurch wird eine gleichförmige Anregung des Gehäuses, in deren Folge Resonanzschwingungen auftreten können, vermieden.

Bevorzugt ist das Gehäuse mit mindestens einem Lagersitz für den Planetenträger der ersten Planetenstufe weitergebildet. Ein Lagersitz bezeichnet ein Mittel zum Fixieren eines Lagers. Vorliegend handelt es sich um ein Mittel zum Fixieren eines Lagers, mit dem der Planetenträger der ersten Planetenstufe drehbar in dem Gehäuse gelagert ist. Der Lagersitz kann rotationssymmetrisch zu der Drehachse des Planetenträgers sein.

Neben dem Lagersitz ist das Gehäuse mit einer Stützstruktur für den Lagersitz weitergebildet. Diese erstreckt sich zwischen dem gewellten Bereich und dem Lagersitz. Über die Stützstruktur wird der Lagersitz mit dem gewellten Bereich verbunden. Die Stützstruktur kann zu der Mittelachse der Planetenstufe rotationssymmetrisch sein.

Bevorzugt ist die Stützstruktur mit durchgehenden Öffnungen weitergebildet. Diese können dem Durchfluss von Getriebeöl und/oder der Gewichtsersparnis dienen. Eine Anzahl der durchgehenden Öffnungen der Stützstruktur kann größer sein als die Anzahl der Planeten der ersten Planetenstufe. Weiterbildungsgemäß ist die Anzahl der Öffnungen nicht ganzzahlig teilbar durch die Anzahl der Planeten der ersten Planetenstufe. Auch dies ist im Hinblick auf das Schwingungsverhalten des Getriebes von Vorteil.

In einer bevorzugten Weiterbildung weist die Stützstruktur Versteifungsrippen auf. Diese können einstückig in die Stützstruktur integriert sein. Sie erstrecken sich zwischen dem gewellten Bereich und dem Lagersitz, verbinden also den gewellten Bereich und den Lagersitz miteinander.

Um das Schwingungsverhalten des Getriebes weiter zu verbessern, ist eine Anzahl der Versteifungsrippen weiterbildungsgemäß nicht ganzzahlig teilbar durch die Anzahl der Planeten der ersten Planetenstufe. Insbesondere kann die Anzahl der Versteifungsrippen größer sein als die Anzahl der Planeten der ersten Planetenstufe.

Nicht nur die Anzahl der Versteifungsrippen hat Einfluss auf das Schwingungsverhalten des Getriebes, sondern auch die Winkel, in denen die Versteifungsrippen zueinander versetzt angeordnet sind. Ein günstiges Schwingungsverhalten ergibt sich bei einem ungleichförmigen Winkelversatz der Versteifungsrippen.

In einer entsprechenden bevorzugten Weiterbildung sind jeweils zwei Versteifungsrippen bezüglich der Drehachse des Planetenträgers rotationssymmetrisch. Die jeweils zwei Versteifungsrippen können dann durch Drehung um die Drehachse des Planetenträgers aufeinander abgebildet werden. Ein entsprechender Drehwinkel ist weiterbildungsgemäß nicht ganzzahlig teilbar durch einen Quotienten aus 360° und der Anzahl der Versteifungsrippen.

In einer bevorzugten Weiterbildung verjüngt sich der gewellte Bereich in axialer Richtung. Eine Verjüngung des axialen Bereichs erfolgt entsprechend entlang der Mittelachse der ersten Planetenstufe. Insbesondere kann es sich um eine konische Verjüngung handeln. Dabei verläuft die Außenwand des Gehäuses in dem gewellten Bereich in mindestens einem Längsschnitt, vorzugsweise in jedem Längsschnitten entlang der die Schenkel eines Trapezes aus.

Durch die Weiterbildung ergibt sich entgegen der Richtung der Verjüngung eine Aufweitung des gewellten Bereichs. Dies macht den gewellten Bereich tragfähiger. Insbesondere verbessert sich die Tragfähigkeit des gewellten Bereichs. Dies ist insbesondere dann vorteilhaft, wenn das Getriebe vertikal ausgerichtet ist, wenn also die Mittelachse der ersten Planetenstufe vertikal verläuft oder ist gegenüber einer vertikal verlaufenden Geraden um weniger als 45°, vorzugsweise um weniger als 10 oder 20° verkippt ist und sich der gewellte Bereich bevorzugt nach oben hin verjüngt, wobei über den gewellten Bereich Gewichtskräfte des Getriebes aufgenommen und abgestützt werden.

Neben der ersten Planetenstufe weist das Getriebe in einer bevorzugten Weiterbildung eine zweite Planetenstufe auf. Obige Ausführungen gelten weiterbildungsgemäß mutatis mutandis auch für die Anzahl der Planeten der zweiten Planetenstufe. Dies bedeutet im Einzelnen, dass weiterbildungsgemäß die Anzahl der Wellen des gewellten Bereichs und/oder die Anzahl der durchgehenden Öffnungen der Stützstruktur und/oder die Anzahl der Versteifungsrippen größer sein kann und weiterbildungsgemäß nicht ganzzahlig teilbar ist durch die Anzahl der Planeten der zweiten Planetenstufe.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
Fig. 1 ein Gehäuseteil;
Fig. 2 einen Längsschnitt des Gehäuseteils; und
Fig. 3 einen Querschnitt des Gehäuseteils.

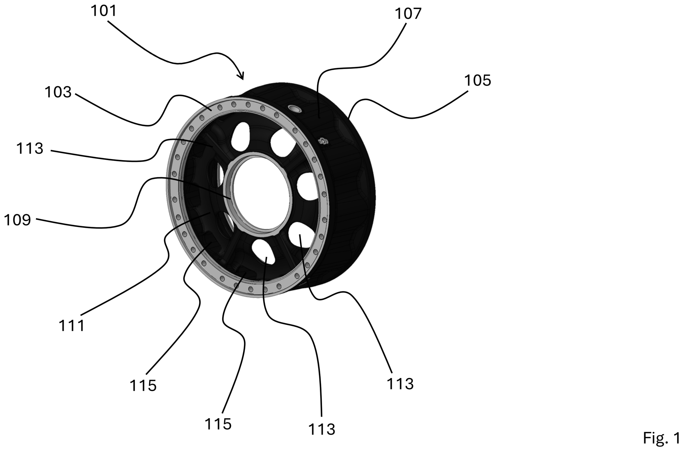

Der in den Fig. 1, 2 und 3 dargestellte Gehäuseteil 101 weist einen ersten Schraubflansch 103 und einen zweiten Schraubflansch 105 auf. Die Schraubflansche 103, 105 dienen dazu, den Gehäuseteil 101 mit weiteren Gehäuseteilen zu verschrauben.

Zwischen den Schraubflanschen 103, 105 erstreckt sich ein Bereich 107 einer Außenwand des Gehäuses. Zwischen den Schraubflanschen 103, 105, d.h. von Schraubflansch 130 zu Schraubflansch 105, verläuft der Bereich 107 geradlinig. Orthogonal dazu beziehungsweise in Umfangsrichtung ist der Bereich 107 gewellt.

Der Gehäuseteil 101 bildet einen Lagersitz 109 für ein Lager eines Planetenträgers aus. Der Lagersitz 109 ist mittels einer Stützstruktur 111 in dem Bereich 107 fixiert. Die Stützstruktur 111 erstreckt sich entsprechend zwischen dem Bereich 107 und dem Lagersitz 109.

Zur Stabilisierung weist die Stützstruktur 111 Versteifungsrippen 113 auf. Diese verlaufen in radialer Richtung und verbinden den Lagersitz 109 kraftleitend mit dem Bereich 107.

Ein Winkelversatz zwischen den Versteifungsrippen 113 ist im Hinblick auf ein verbessertes Schwingungsverhalten ungleichförmig. In dem Ausführungsbeispiel sind vier Versteifungsrippen 113 vorhanden. Diese sind um Winkel zueinander verkippt angeordnet, die sich von 90° unterscheiden. Insbesondere verlaufen daher keine zwei Versteifungsrippen 113 miteinander fluchtend.

Die Stützstruktur 111 weist eine erste Gruppe von Durchgangsöffnungen 115 und eine zweite Gruppe von Durchgangsöffnungen 117 auf. Die Durchgangsöffnungen 113, 115 dienen dazu, die Stützstruktur 111 für Öl durchlässig zu machen. In dem Ausführungsbeispiel sind sieben Durchgangsöffnungen 115 der ersten Gruppe und elf Durchgangsöffnungen 117 der zweiten Gruppe vorhanden. Ein vorteilhaftes Schwingungsverhalten ergibt sich beispielsweise, wenn der oben genannte Planetenträger vier Planeten aufweist, da sowohl die Zahl 7 als auch die Zahl 11 nicht ganzzahlig durch vier teilbar sind.

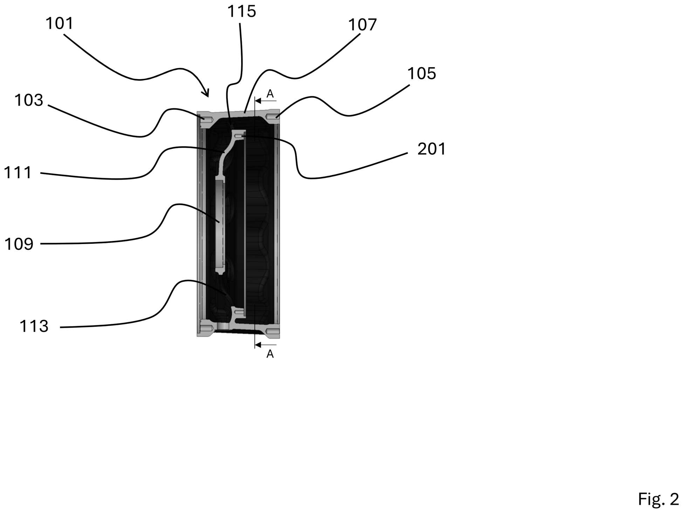

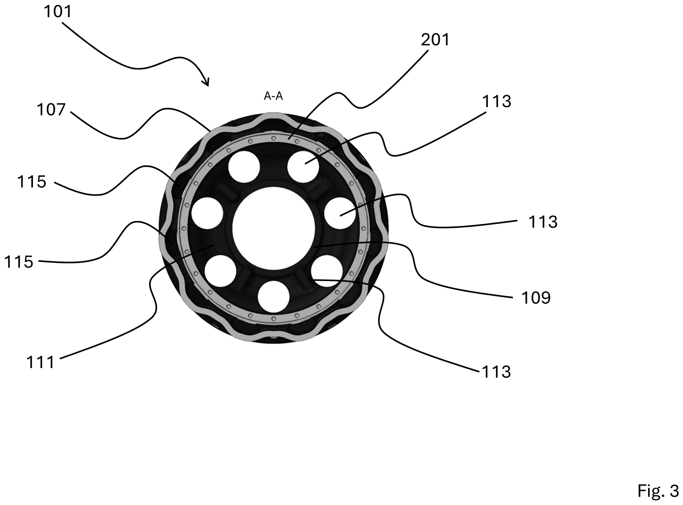

Radial zwischen dem Bereich 107 und dem Lagersitz 109 verläuft ein dritter Schraubflansch 201. Dieser ist in den Fig. 2 und 3 ersichtlich. In dem dritten Schraubflansch 201 wird ein Hohlrad fixiert, das zu derselben Planetenstufe gehört wie der in dem Lagersitz 109 gelagerte Planetenträger.

Der dritte Schraubflansch 201 ist in der Stützstruktur 111 fixiert. Radial zwischen dem Lagersitz 109 und dem dritten Schraubflansch 201 sind die Durchgangsöffnungen 115 der ersten Gruppe angeordnet. Die Durchgangsöffnungen 117 der zweiten Gruppe sind radial zwischen dem dritten Schraubflansch 201 und dem Bereich 107 angeordnet.

### Bezugszeichen

- 101: Gehäuseteil
- 103: Schraubflansch
- 105: Schraubflansch
- 107: gewellter Bereich
- 109: Lagersitz
- 111: Stützstruktur
- 113: Versteifungsrippe
- 115: Durchgangsöffnung
- 117: Durchgangsöffnung
- 201: Schraubflansch

## Patentansprüche

1. Getriebe mit einer ersten Planetenstufe und einem Gehäuse; wobei
eine Außenwand des Gehäuses (101) einen um die erste Planetenstufe herum verlaufenden gewellten Bereich (107) aufweist; **dadurch gekennzeichnet, dass**
eine Anzahl von Wellen des gewellten Bereichs (107) nicht ganzzahlig teilbar ist durch eine Anzahl von Planeten der ersten Planetenstufe.

2. Getriebe nach Anspruch 1; **dadurch gekennzeichnet, dass**
das Gehäuse (101) mindestens einen Lagersitz (109) für einen Planetenträger der ersten Planetenstufe und eine Stützstruktur (111) für den Lagersitz (109) ausbildet; wobei
die Stützstruktur (111) sich zwischen, dem gewellten Bereich (107) und dem Lagersitz (109) erstreckt.

3. Getriebe nach dem vorhergehenden Anspruch; **dadurch gekennzeichnet, dass** die Stützstruktur (111) durchgehende Öffnungen (115, 117) aufweist, deren Anzahl nicht ganzzahlig teilbar ist durch die Anzahl der Planeten der ersten Planetenstufe.

4. Getriebe nach einem der Ansprüche 2 oder 3; **dadurch gekennzeichnet, dass** die Stützstruktur (111) Versteifungsrippen (113) aufweist, die sich zwischen dem gewellten Bereich (107) und dem Lagersitz (109) erstrecken, und deren Anzahl nicht ganzzahlig teilbar ist durch die Anzahl der Planeten der ersten Planetenstufe.

5. Getriebe nach einem der Ansprüche 2 bis 4; **dadurch gekennzeichnet, dass**
die Stützstruktur (111) Versteifungsrippen (113) aufweist; wobei jeweils zwei Versteifungsrippen (113) um einen Winkel versetzt zueinander angeordnet sind, der nicht ganzzahlig teilbar ist durch Quotienten aus 360° und der Anzahl der Versteifungsrippen.

6. Getriebe nach einem der vorhergehenden Ansprüche; **dadurch gekennzeichnet, dass**
der gewellte Bereich (107) sich in axialer Richtung verjüngt.

7. Getriebe nach einem der vorhergehenden Ansprüche; **gekennzeichnet durch** eine zweite Planetenstufe; wobei
die Anzahl von Wellen des gewellten Bereichs (107) und/oder die Anzahl der durchgehenden Öffnungen (115, 117) der Stützstruktur und/oder die Anzahl der Versteifungsrippen (113) nicht ganzzahlig teilbar ist durch die Anzahl der Planeten der zweiten Planetenstufe.
